# EUROPÄISCHE PATENTANMELDUNG

(11) **EP 2 679 452 A1**
(43) Veröffentlichungstag der Anmeldung: **01.01.2014**
(21) Anmeldenummer: 13171867.8
(22) Anmeldetag: 13.06.2013
(51) Int. Cl.: B60R 22/02, B60R 22/03

(54) **Sicherheitssitz mit Gurtpositionierung**

(30) Priorität: 26.06.2012 DE 102012105579
(71) Anmelder: AUTOFLUG GMBH, 25462 Rellingen (DE)
(72) Erfinder: Herbst, Andé, 25469 Halstenbek (DE)
(74) Vertreter: Müller, Karl-Ernst

(57) **Zusammenfassung**

Ein Sicherheitssitz für Land-, Luft- und Seefahrzeuge mit einem Sitzteil (23) und mit einem an der Sitzstruktur und/oder einer Fahrzeugstruktur befestigten, zwei über den Beckenbereich einer auf dem Sicherheitssitz sitzenden Person verlaufende Beckengurte (12) und/oder zwei über die Schultern der Person verlaufende Schultergurte (17) aufweisenden Sicherheitsgurtsystem, ist dadurch gekennzeichnet, dass Beckengurte (12) und/oder Schultergnrte (17) des Sicherheitsgurtsystems mit aufblasbaren Schläuchen (11, 15, 16) verbunden sind, die im aufgeblasenen Zustand eine aufgerichtete und dadurch eine definierte Bereithalteposition der Beckengurte (12) und/oder der Schultergurte (17) für deren Anlegevorgang seitens der Person herbeiführende Gestalt einnehmen und dass die aufblasbaren Schläuche (11, 15, 16) an ein die Sitzfläche auf dem Sitzteil (23) bildendes Sitzkissen (10) angeschlossen sind, welches in unbelastetem Zustand einen durch Belastung und damit einhergehende Formänderung in die angeschlossenen Schläuche (11 15, 16) einzupressenden Luftvorrat beinhaltet und nach Aufheben der Belastung selbsttätig seine belastungsfreie Form einnimmt und dabei den Luftvorrat einsaugt.

## Beschreibung

Die Erfindung betrifft einen Sicherheitssitz für Land-, Luft- und Seefahrzeuge mit einem Sitzteil und mit einem an der Sitzstruktur und/oder einer Fahrzeugstruktur befestigten, zwei über den Beckenbereich einer auf dem Sicherheitssitz sitzenden Person verlaufende Beckengurte und/oder zwei über die Schultern der Person verlaufende Schultergurte aufweisenden Sicherheitsgurtsystem.

Ein Sicherheitssitz mit den vorgenannten Merkmalen ist in der WO 2008/086967 A beschrieben. Bei dem bekannten Sicherheitssitz sind die Schultergurtes eines Sicherheitsgurtsystems an den vertikalen Aufhängungen des Sicherheitssitzes befestigt, so dass sie im unbenutzten Zustand herabhängen. Soweit die Schultergurte über ein im Brustbereich des Insassen zu Liegen kommendes Gurtschloss miteinander verbindbar sind, setzen sich die Gurte als eine Art Beckengurte zu an dem Sitzteil befindlichen Gurtbefestigungen fort. Es sind im Stand der Technik jedoch auch von den Schultergurten getrennte Beckengurte im Rahmen eines Sicherheitsgurtsystems bekannt.

Bei derartigen Sicherheitssitzen, insbesondere bei Verwendung in Truppentransportern zur Beförderung von eine sperrige Ausrüstung tragenden Personen entsteht das Problem, dass die Bestandteile des Sicherheitsgurtsystems entweder die Bewegungsfreiheit der Personen beim Einnehmen des Sitzplatzes stören oder aber für den Anschnallvorgang für die auf den Sitz sitzenden Personen nicht oder schlecht erreichbar sind.

Der Erfindung liegt daher die Aufgabe zugrunde, einen Sicherheitssitz der eingangs genannten Art so einzurichten, dass das Anlegen der Sicherheitsgurte bei Benutzung des Sicherheitssitzes auf eine einfache Art ermöglicht ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass Beckengurte und/oder Schultergurte des Sicherheitsgurtsystems mit aufblasbaren Schläuchen verbunden sind, die im aufgeblasenen Zustand eine aufgerichtete und dadurch eine definierte Bereithalteposition der Beckengurte und/oder der Schultergurte für deren Anlegevorgang seitens der Person herbeiführende Gestalt einnehmen und dass die aufblasbaren Schläuche an ein die Sitzfläche auf dem Sitzteil bildendes Sitzkissen angeschlossen sind, welches in unbelastetem Zustand einen durch Belastung und damit einhergehende Formänderung in die angeschlossenen Schläuche einzupressenden Luftvorrat beinhaltet und nach Aufheben der Belastung selbsttätig seine belastungsfreie Form einnimmt und dabei den Luftvorrat einsaugt.

Mit der Erfindung ist der Vorteil verbunden, dass beim Hinsetzen der betreffenden Person auf das mit dem erfindungsgemäß ausgerüsteten Sitzkissen versehenen Sitzteil des Sicherheitssitzes ein automatisches Aufblasen der an das Sitzkissen angeschlossenen Schläuche erfolgt, so dass durch das durch die Formgebung für die Schläuche vorgegebene Aufrichten der aufblasbaren Schläuche die jeweils davon getragenen Gurte des Sicherheitsgurtsystems in eine Bereithaltestellung gebracht werden, in welcher die entsprechenden Enden von Beckengurten und/oder Schultergurten von der Person ergriffen und die Gurte angelegt werden können. Da der benötigte Luftvorrat in dem Sitzkissen vor dessen Benutzung zur Verfügung steht, wird die benötigte Aufblasluft genau in dem Moment erzeugt und in die aufblasbaren Schläuche eingeleitet, in welchem bei Benutzung des Sicherheitssitzes die Bereithalteposition der Gurte benötigt wird. Aufgrund eines langsamen Entweichens der eingepressten Luft aus den Schläuchen werden die Gurte des Sicherheitsgurtsystems nach entsprechender Zeit wieder schlaff und beeinträchtigen den Anlegekomfort der angeschnallten Person nicht. Da sich das Sitzkissen nach seiner Entlastung selbsttätig wieder mit Umgebungsluft füllt, steht der erforderliche Luftvorrat somit für eine folgende Benutzung des Sicherheitssitzes zur Verfügung. Insofern ist in vorteilhafter Weise keine Energiezufuhr von außen erforderlich, um die Bereithalteposition der Gurte des Sicherheitssystems herbeizuführen.

Im Rahmen der Erfindung ist es weiterhin in vorteilhafter Weise möglich, die Gurte des Sicherheitsgurtsystems in einer platzsparenden Weise anzuordnen, beispielsweise derart, dass sich die Gurte durch das Aufblasen selbsttätig durch Ausschieben aus einer hinter dem Rücken des Insassen befindlichen Ablagestellung in die Bereithalteposition bewegen, oder dass die Gurte in ihrer Ablegestellung zu einer Rolle aufgerollt sind und sich durch das Aufblasen der Schläuche in die Bereithalteposition ausrollen. Hierbei sind zusätzlich Mechanismen vorzusehen, welche die Gurte nach Gebrauch beim Ablegen in die jeweilige Ablegestellung zurückführen.

Nach einem Ausführungsbeispiel der Erfindung ist vorgesehen, dass sich die aufblasbaren Schläuche über eine Teillänge von Beckengurten und/oder Schultergurten erstrecken, so dass die bei Benutzung zu ergreifenden Enden der betreffenden Gurte herabhängen und frei und damit bequem zugänglich sind. Nach einem Ausführungsbeispiel der Erfindung kann vorgesehen sein, dass die aufblasbaren Schläuche an einer Außenseite von Beckengurten und/oder Schultergurten angebracht sind.

Alternativ kann in einer bevorzugten Ausführungsform der Erfindung vorgesehen sein, dass die aufblasbaren Schläuche in das Innere der röhrenförmig ausgebildeten Beckengurte und/oder Schultergurte eingelegt und darin fixiert sind. Damit ist der Anlegekomfort des Sicherheitsgurtsystems weiter verbessert.

Soweit im Anschluss an den Anschnallvorgang der Aufblaszustand der Schläuche nicht mehr benötigt wird, kann vorgesehen sein, dass die aufblasbaren Schläuche mit Entlüftungsöffnungen versehen sind; diese sind so ausgestaltet, dass sie beim Aufblasen der Schläuche den erforderlichen Widerstand gegen ein sofortiges Ausströmen der eingepressten Luft bieten, andererseits aber im Anschluss an den Aufblasvorgang eine Erschlaffung der Schläuche ermöglichen.

Soweit ein Sicherheitssitz auch eine Rückenlehnenstruktur aufweisen kann, ist nach einem Ausführungsbeispiel der Erfindung vorgesehen, dass die die Schultergurte tragenden aufblasbaren Schläuche über einen Verlaufsabschnitt an der Rückenlehnenstruktur fixiert sind.

Im Hinblick auf die erfindungsgemäße Funktion des Sitzkissens als Aufblaselement für die daran angeschlossenen aufblasbaren Schläuche kann das Sitzkissen aus einem offenporigen sowie rückstellenden Material bestehen und/oder Luftkammern aufweisen, wobei das Sitzkissen auf seiner Außenseite von einer luftdichten Umhüllung umschlossen ist, um bei der formändernden Belastung des Sitzkissens den Luftvorrat gezielt in die angeschlossenen aufblasbaren Schläuche einzupressen.

Soweit funktionsgemäß vorgesehen ist, dass das Sitzkissen bei Entlastung seine ursprüngliche Form wieder einnimmt und dabei den in ihm zu speichernden

Luftvorrat aus der Umgebung ansaugt, kann vorgesehen sein, dass in der luftdichten Umhüllung wenigstens ein in der Ausblasrichtung gesperrtes Lufteinsaugventil angeordnet ist.

In alternativen Ausführungsformen der Erfindung kann vorgesehen sein, dass das Sitzkissen mit den daran angeschlossenen aufblasbaren Schläuchen eine auf den Sitzteil des Sicherheitssitzes aufzulegende Einheit bildet beziehungsweise dass das Sitzkissen einen integralen Bestandteil des Sitzteils des Sicherheitssitzes bildet.

In der Zeichnung sind Ausführungsbeispiele der Erfindung wiedergegeben, welche nachstehend beschrieben sind. Es zeigen:
Fig. 1 ein Sitzkissen mit daran angeschlossenen aufblasbaren Schläuchen als Träger von Gurtbestandteilen zur Verwendung mit einem Sicherheitssitz,
Fig. 2 einen Sicherheitssitz mit integrierter Gurtpositionierung in einer schematisierten Darstellung.

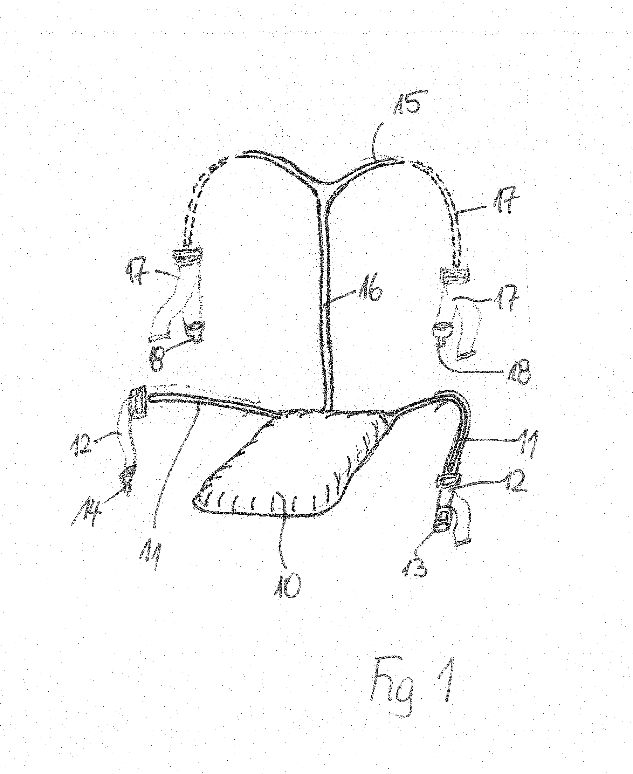

Wie sich zunächst aus Figur 1 ergibt, sind an ein Sitzkissen 10 aufblasbare Schläuche 11 für zwei als Beckengurte 12 eingerichtete Gurtteile angeschlossen. An dem freien Ende des in Figur 1 rechten Beckengurtes 12 ist ein Zentralgurtschloss 13 angebracht, wobei an dem freien Ende des gegenüberliegenden, in Figur 1 linken Beckengurtes 12 eine Schlosszunge 14 zum Einstecken in das zentrale Gurtschloss 13 angeordnet ist. Entsprechend ist ein in der Darstellung von Figur 1 zentraler Schlauchast 16 an das Sitzkissen 10 angeschlossen, der sich in zwei einzelne, aufblasbare Schläuche 15 für davon getragene Schultergurte 17 aufteilt, wobei von den Schultergurten 17 jeweils nur die Endabschnitte mit den daran angebrachten, ebenfalls in das zentrale Gurtschloss 13 einzupickenden Schlosszungen 18 dargestellt ist.

In der Darstellung in Figur 1 befinden sich die aufblasbaren Schläuche 11 sowie 16, 15 in ihrer aufgeblasenen Stellung, in welcher sie die Enden der Beckengurte 12 wie auch der Schultergurte 17 in einer Bereithalteposition fixieren, in welcher diese Gurtenden in einfacher Weise von einer auf dem Sitzkissen 10 sitzenden, nicht weiter dargestellten Person ergriffen werden können.

Soweit in Figur 1 der aufgeblasene Zustand der Schläuche 11, 15, 16 dargestellt ist, ist die dafür benötigte Aufblasluft durch eine Belastung des Sitzkissens 10 mit einer darauf sitzenden Person durch Zusammendrücken des Sitzkissens aus dem Sitzkissen 10 herausgedrückt. Im Anschluss an den Anlegevorgang erschlaffen die aufblasbaren Schläuche 11, 15, 16, so dass sich die Beckengurte 12 und Schultergurte 17 ohne eine Formgebung an den Körper der angeschnallten Person anschmiegen, ohne dabei den Anlegekomfort zu verringern.

Verlässt die auf dem Sitzkissen 10 sitzende Person das Sitzkissen, so nimmt das zusammengedrückte Sitzkissen 10 selbsttätig seine Ausgangsform wieder ein und saugt sich dabei mit Umgebungsluft voll, so dass der in dem Sitzkissen gespeicherte Luftvorrat für die nächste Benutzung des Sitzkissens 10 zur Verfügung steht.

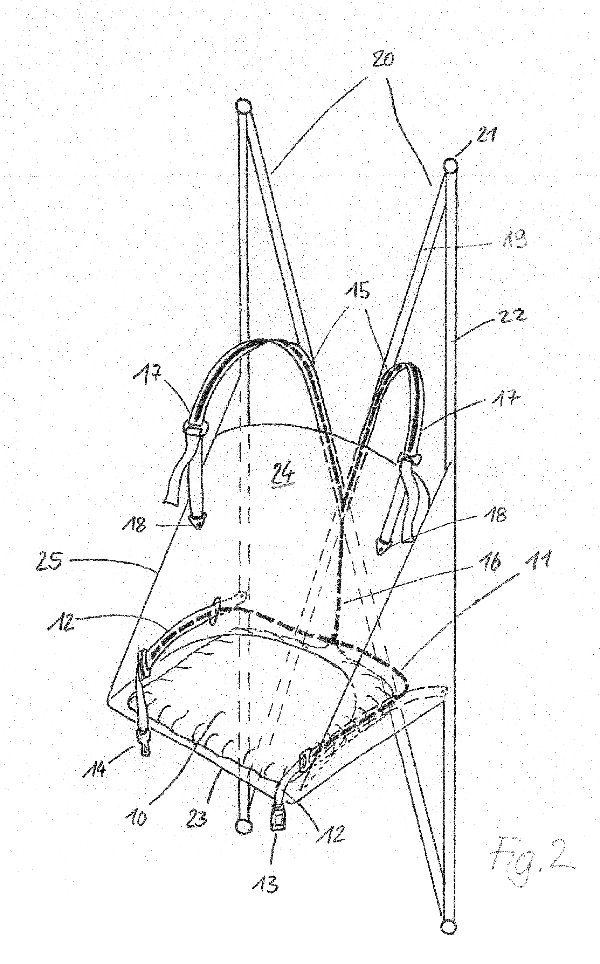

In Figur 2 ist ein entsprechend der gattungsbildenden WO 2008/086967 A fahrzeugfest aufgehängter Sicherheitssitz gemeinsam mit einer in Figur 1 grundsätzlich dargestellten Sitzkissen- und Schlauchanordnung wiedergeben. Dabei ist der Sicherheitssitz von einem Gurtgerüst 20 getragen, welches von einem über fahrzeugfeste Verankerungen 21 mit vertikalen Gurtabschnitten 22 und Diagonalgurtabschnitten 19 geführten Gurt gebildet ist. Der ein Sitzteil 23 und eine Rückenlehne 24 aufweisende Sicherheitssitz ist dabei an den vertikalen Gurtabschnitten 22 des Gurtgerüsts angeschlagen, wobei zusätzliche, von den vertikalen Gurtabschnitten 22 abgehende Haltegurte 25 mit dem Sitzteil 23 verbunden sind und dieses halten.

Auf den Sitzteil 23 ist ein Sitzkissen 10 aufgelegt, an welches, wie zu Figur 1 beschrieben, im Inneren der an die vertikalen Gurtabschnitte 22 des Gurtgerüsts 20 angeschlagenen Beckengurte 12 verlaufende aufblasbare Schläuche 11 angeschlossen sind. Soweit die Schultergurte 17 an den Diagonalgurtabschnitten 19 befestigt sind, ist entsprechend hinter der Rückenlehne 24 des Sicherheitssitzes der zentrale Schlauchast 16 vom Sitzkissen 10 zu der Anbindung der Schultergurte 17 hochgeführt, der sich dort in die beiden einzelnen, ebenfalls im Inneren der Schultergurte 17 angeordneten aufblasbaren Schläuche 15 aufteilt. Hierzu sind sowohl Beckengurte 12 wie auch Schultergurte 17 jeweils röhrenförmig ausgebildet.

Es ist zu erkennen, dass bei aufgeblasenen Schläuchen 11 bzw. 15, 16 die Enden der Beckengurte 12 einerseits wie auch der Schultergurte 17 andererseits in einer Bereithalteposition bereitgehalten sind, in welcher eine auf dem Sitzteil 23 mit Sitzkissen 10 sitzende Person die Enden der betreffenden Gurte leicht ergreifen kann.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sicherheitssitz für Land-, Luft- und Seefahrzeuge mit einem Sitzteil (23) und mit einem an der Sitzstruktur und/oder einer Fahrzeugstruktur befestigten, zwei über den Beckenbereich einer auf dem Sicherheitssitz sitzenden Person verlaufende Beckengurte (12) und/oder zwei über die Schultern der Person verlaufende Schultergurte (17) aufweisenden Sicherheitsgurtsystem, **dadurch gekennzeichnet, dass** Beckengurte (12) und/oder Schultergurte (17) des Sicherheitsgurtsystems mit aufblasbaren Schläuchen (11, 15, 16) verbunden sind, die im aufgeblasenen Zustand eine aufgerichtete und dadurch eine definierte Bereithalteposition der Beckengurte (12) und/oder der Schultergurte (17) für deren Anlegevargang seitens der Person herbeiführende Gestalt einnehmen und dass die aufblasbaren Schläuche (11, 15, 16) an ein die Sitzfläche auf dem Sitzteil (23) bildendes Sitzkissen (10) angeschlossen sind, welches in unbelastetem Zustand einen durch Belastung und damit einhergehende Formänderung in die angeschlossenen Schläuche (11, 15, 16) einzupressenden Luftvorrat beinhaltet und nach Aufheben der Belastung selbsttätig seine belastungsfreie Form einnimmt und dabei den Luftvorrat einsaugt.

2. Sicherheitssitz nach Anspruch 1, **dadurch gekennzeichnet, dass** die aufblasbaren Schläuche (11, 15, 16) sich über eine Teillänge von Beckengurten (12) und/oder Schultergurten (17) erstrecken.

3. Sicherheitssitz nach Anspruch 1 oder 2, **dadurch gekennzeichnet, dass** die aufblasbaren Schläuche (11, 15, 16) an einer Außenseite von Beckengurten (12) und/oder Schultergurten (17) angebracht sind.

4. Sicherheitssitz nach Anspruch 1 oder 2, **dadurch gekennzeichnet, dass** die aufblasbaren Schläuche (11, 15, 16) in das Innere der röhrenförmig ausgebildeten Beckengurte (12) und/oder Schultergurte (17) eingelegt und darin fixiert sind.

5. Sicherheitssitz nach einem der Ansprüche 1 bis 4, **dadurch gekennzeichnet, dass** die aufblasbaren Schläuche (11, 15, 16) mit Entlüftungsöffnungen versehen sind.

6. Sicherheitssitz nach einem der Ansprüche 1 bis 5 aufweisend eine Rückenlehne, **dadurch gekennzeichnet, dass** die die Schultergurte (17) tragenden aufblasbaren Schläuche (15, 16) über einen Verlaufsabschnitt an der Rückenlehnenstruktur fixiert sind.

7. Sicherheitssitz nach einem der Ansprüche 1 bis 6, **dadurch gekennzeichnet, dass** das Sitzkissen (10) aus einem offenporigen sowie rückstellenden Material besteht und/oder Luftkammern aufweist und auf der Außenseite von einer luftdichten Umhüllung umschlossen ist.

8. Sicherheitssitz nach Anspruch 7, **dadurch gekennzeichnet, dass** in der luftdichten Umhüllung wenigstens ein in der Ausblasrichtung gesperrtes Lufteinsaugventil angeordnet ist.

9. Sicherheitssitz nach einem der Ansprüche 1 bis 8, **dadurch gekennzeichnet, dass** das Sitzkissen (10) mit den daran angeschlossenen aufblasbaren Schläuchen (11, 15, 16) eine auf den Sitzteil (23) des Sicherheitssitzes aufzulegende Einheit bildet.

10. Sicherheitssitz nach einem der Ansprüche 1 bis 8, **dadurch gekennzeichnet, dass** das Sitzkissen (10) einen integralen Bestandteil des Sitzteils (23) des Sicherheitssitzes bildet.
